# EUROPEAN PATENT APPLICATION

(11) **EP 3 339 097 A1**
(43) Date of publication of application: **27.06.2018**
(21) Application number: 15901614.6
(22) Date of filing: 11.12.2015
(51) Int. Cl.: B60R 1/00, G02B 27/01

(54) **HEAD-UP DISPLAY, HEAD-UP DISPLAY METHOD AND VEHICLE-MOUNTED DISPLAY DEVICE**

(30) Priority: 19.08.2015 CN 201510510058
(71) Applicant: BOE Technology Group Co., Ltd., Beijing 100015 (CN)
(72) Inventor: NIU, Bei, Beijing 100176 (CN); WEI, Wei, Beijing 100176 (CN)
(74) Representative: Gesthuysen Patent- und Rechtsanwälte
(86) International application number: PCT/CN2015/097120
(87) International publication number: WO 2017/028411

(57) **Abstract**

The embodiments of the present invention provide a head-up display, a head-up display method and a vehicle-mounted display device. The head-up display includes: a digital light processing unit used for generating an imaging beam; a reflector unit used for reflecting the imaging beam to a reflective surface cooperating with the head-up display to form an image; and an adjusting unit used for adjusting a direction of the reflector unit, thereby providing a desired depth to the image. In the embodiments of the invention, by presenting an image with a desired depth, the displayed information can be fused together with the environment. In this way, information can be presented in the best mode, visual fatigue of the driver can also be effectively avoided, thereby avoiding danger.

## Description

### TECHNICAL FIELD

The present invention relates to the field of display technology, particularly to a head-up display, a head-up display method and a vehicle-mounted display device.

### BACKGROUND

Head-up display (HUD) allows the driver to see all the necessary information without distraction, so it is increasingly used in vehicles.

The existing head-up display usually has a transparent display screen, and information is projected on the surface of the transparent display screen. Alternatively, the information can also be projected on the windshield of the vehicle through a light path, so as to realize head-up display.

### SUMMARY

However, the inventor has realized that, for specific content of the information and vehicle driving states, different head-up display modes should be applied. In this way, information can be presented in the best mode, visual fatigue of the driver can also be effectively avoided, thereby avoiding danger.

To this end, the embodiments of the present invention provide a head-up display, a head-up display method and a vehicle-mounted display device. By presenting an image with a desired depth, the displayed information can be fused together with the environment.

An embodiment of the present invention provides a head-up display. The head-up display includes: a digital light processing unit used for generating an imaging beam; a reflector unit used for reflecting the imaging beam to a reflective surface cooperating with the head-up display to form an image; and an adjusting unit used for adjusting a direction of the reflector unit, thereby providing a desired depth to the image.

In the embodiment of the invention, with the adjusting unit, the image with the desired depth can be presented, the displayed information can thus be fused together with the environment. In this way, information can be presented in the best mode, visual fatigue of the driver can also be effectively avoided, thereby avoiding danger.

Preferably, the digital light processing unit includes a digital micromirror device. The digital micromirror device includes a light source and a micromirror array.

Preferably, the digital micromirror device further includes a color wheel for realizing color display.

Preferably, the adjusting unit includes a first mechanical motor device for rotating the reflector unit around a horizontal axis.

Preferably, the adjusting unit includes a second mechanical motor device for rotating the reflector unit around a vertical axis.

Preferably, the adjusting unit adjusts the direction of the reflector unit based on a content of the image.

Preferably, the adjusting unit adjusts the direction of the reflector unit based on a running speed so that the depth of the image increases with the increase of the running speed.

Preferably, the head-up display further includes a housing unit. The housing unit accommodates the digital light processing unit, the reflector unit and the adjusting unit. The housing unit includes a transparent portion located between the reflector unit and the reflective surface.

An embodiment of the present invention provides a head-up display method. The method includes: generating an imaging beam; reflecting the imaging beam to a reflective surface to form an image; and adjusting a direction of the reflected imaging beam, thereby providing a desired depth to the image.

With the adjusting unit, the image with the desired depth can be presented in the embodiment of the present invention, the displayed information can thus be fused together with the environment. In this way, information can be presented in the best mode, visual fatigue of the driver can also be effectively avoided, thereby avoiding danger.

Preferably, the step of adjusting a direction of the reflected imaging beam includes adjusting the direction of the reflected imaging beam around a horizontal axis.

Preferably, the step of adjusting a direction of the reflected imaging beam includes adjusting the direction of the reflected imaging beam around a vertical axis.

Preferably, the step of adjusting a direction of the reflected imaging beam includes adjusting the direction of the reflected imaging beam based on a content of the image.

Preferably, the step of adjusting a direction of the reflected imaging beam includes adjusting the direction of the reflected imaging beam based on a running speed so that the depth of the image increases with the increase of the running speed.

An embodiment of the present invention further provides a vehicle-mounted display device. The vehicle-mounted display device includes the above mentioned head-up display. The reflective surface is an inner surface of a windshield for a vehicle.

Preferably, the reflective surface is an inner surface of a front windshield for a vehicle.

Preferably, the reflective surface is an inner surface of a rear windshield for a vehicle.

### BRIEF DESCRIPTION OF THE DRAWINGS

In order to more clearly illustrate the technical solutions in embodiments of the invention or in the prior art, the appended drawings needed to be used in the description of the embodiments or the prior art will be introduced briefly in the following. Obviously, the drawings in the following description are only some embodiments of the invention, and for those of ordinary skills in the art, other drawings may be obtained according to these drawings under the premise of not paying out creative work.
Fig. 1 is a structural schematic diagram of a head-up display according to an embodiment of the present invention;
Fig. 2 is a schematic diagram showing a display effect of an embodiment of the present invention; and
Fig. 3 is a structural schematic diagram of a vehicle-mounted display device according to an embodiment of the present invention.

### DETAILED DESCRIPTION OF THE INVENTION

In the following, the technical solutions in embodiments of the invention will be described clearly and completely in connection with the drawings in the embodiments of the invention. Obviously, the described embodiments are only part of the embodiments of the invention, and not all of the embodiments. Based on the embodiments in the invention, all other embodiments obtained by those of ordinary skills in the art under the premise of not paying out creative work pertain to the protection scope of the invention.

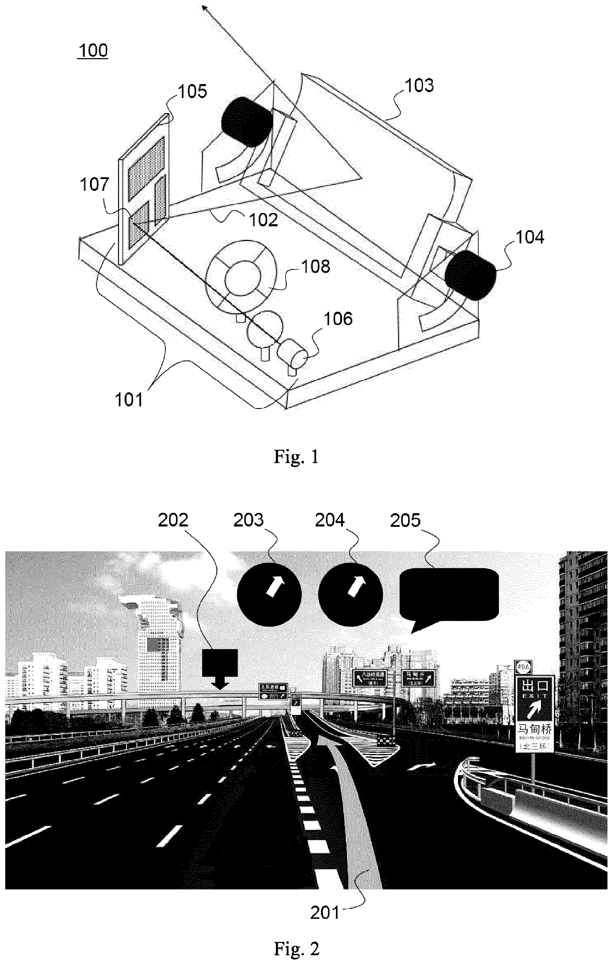

Fig. 1 is a structural schematic diagram of a head-up display according to an embodiment of the present invention. As shown in Fig. 1, an embodiment of the present invention provides a head-up display 100. The head-up display 100 includes a digital light processing unit 101, a reflector unit 103 and an adjusting unit 104. The digital light processing unit 101 is used for generating an imaging beam 102. The reflector unit 103 is used for reflecting the imaging beam 102 to a reflective surface (not shown in Fig. 1) cooperating with the head-up display 100 to form an image. The adjusting unit 104 is used for adjusting a direction of the reflector unit 103, thereby providing a desired depth to the image.

In the embodiment of the invention, with the adjusting unit, the image with the desired depth can be presented, the displayed information can thus be fused together with the environment. In this way, information can be presented in the best mode, visual fatigue of the driver can also be effectively avoided, thereby avoiding danger.

Preferably, the digital light processing unit 101 includes a digital micromirror device 105. The digital micromirror device 105 includes a light source 106 and a micromirror array 107.

The digital light processing unit including the micromirror array can effectively reduce the volume of the head-up display, saving space.

Preferably, the digital micromirror device 105 further includes a color wheel 108 for realizing color display. Optionally, a lens for adjusting the light beam can be arranged between the light source 106 and the color wheel 108. Similarly, a lens for further adjusting the light beam can also be arranged between the color wheel 108 and the micromirror array 107, so that the light beam incident on the micromirror array 107 is uniform.

Preferably, the adjusting unit 104 includes a first mechanical motor device 104 for rotating the reflector unit 103 around a horizontal axis.

The inventor has realized that if the height position of the image is associated with the real scene outside the vehicle, the information can be presented in the best mode. For example, in the real scene outside the vehicle, a distant object is usually located at a higher (i.e., deeper) position, and vice versa. Therefore, by rotating the reflector unit around a horizontal axis, the image can be adjusted to positions with different heights. In this way, during normal driving, the driver can obtain information such as navigation, road signs, speed and oil gauge without adjusting the line of sight.

Preferably, the adjusting unit 104 includes a second mechanical motor device (not shown) for rotating the reflector unit 103 around a vertical axis.

When a vehicle is turning or is about to turn, the driver usually adjusts the line of sight into the turning direction of the vehicle (instead of looking straight ahead). Therefore, by rotating the reflector unit around a vertical axis, the image can be adjusted to the turning direction of the vehicle. In this way, during normal driving, the driver can obtain information such as navigation, road signs, speed and oil gauge without adjusting the line of sight.

Preferably, the adjusting unit 104 adjusts the direction of the reflector unit 103 based on a content of the image.

Fig. 2 is a schematic diagram showing a display effect of an embodiment of the present invention. By means of processing with e.g. a navigation device or a vehicle-mounted CPU, the content of the image (i.e., the content of the information to be presented) is associated with the real scene outside the vehicle. In this way, the information relevant to the real scene outside the vehicle such as navigation 201 and road signs 202 can be presented in the corresponding positions in the real scene. Similarly, information such as speed 203, oil gauge 204, and short message communication 205 can also be displayed at positions that do not affect driving.

Preferably, the adjusting unit 104 adjusts the direction of the reflector unit 103 based on a running speed so that the depth of the image increases with the increase of the running speed.

The inventor has realized that if the running speed increases, the driver usually adjusts the line of sight to a higher position, so as to pay more attention to the road condition at distance, and vice versa. Therefore, by rotating the reflector unit based on the running speed, during normal driving, the driver can obtain information such as navigation, road signs, speed and oil gauge without adjusting the line of sight.

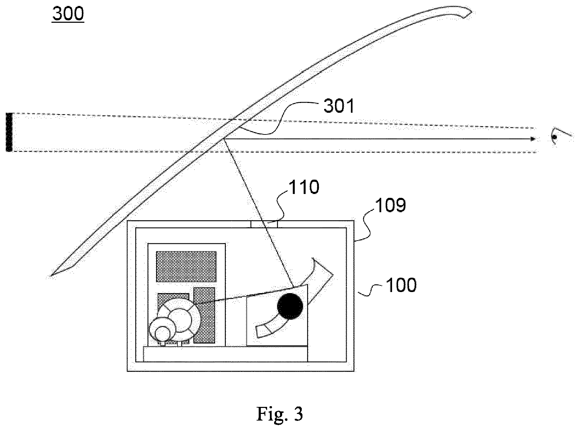

Preferably, as shown in Fig. 3, the head-up display 100 further includes a housing unit 109. The housing unit 109 accommodates the digital light processing unit 101, the reflector unit 103 and the adjusting unit 104. The housing unit 109 also includes a transparent portion 110 located between the reflector unit 103 and the reflective surface 301.

An embodiment of the present invention provides a head-up display method. The method includes: generating an imaging beam; reflecting the imaging beam to a reflective surface to form an image; and adjusting a direction of the reflected imaging beam, thereby providing a desired depth to the image.

By adjusting the direction of the reflected imaging beam, the image with the desired depth can be presented in the embodiment of the present invention, the displayed information can thus be fused together with the environment. In this way, information can be presented in the best mode, visual fatigue of the driver can also be effectively avoided, thereby avoiding danger.

Preferably, the step of adjusting a direction of the reflected imaging beam includes adjusting the direction of the reflected imaging beam around a horizontal axis.

The inventor has realized that if the height position of the image is associated with the real scene outside the vehicle, the information can be presented in the best mode. For example, in the real scene outside the vehicle, a distant object is usually located at a higher (i.e., deeper) position, and vice versa. Therefore, by rotating the reflector unit around a horizontal axis, the image can be adjusted to positions with different heights. In this way, during normal driving, the driver can obtain information such as navigation, road signs, speed and oil gauge without adjusting the line of sight.

Preferably, the step of adjusting a direction of the reflected imaging beam includes adjusting the direction of the reflected imaging beam around a vertical axis.

When a vehicle is turning or is about to turn, the driver usually adjusts the line of sight into the turning direction of the vehicle (instead of looking straight ahead). Therefore, by rotating the reflector unit around a vertical axis, the image can be adjusted to the turning direction of the vehicle. In this way, during normal driving, the driver can obtain information such as navigation, road signs, speed and oil gauge without adjusting the line of sight.

Preferably, the step of adjusting a direction of the reflected imaging beam includes adjusting the direction of the reflected imaging beam based on a content of the image.

By means of processing with e.g. a navigation device or a vehicle-mounted CPU, the content of the image (i.e., the content of the information to be presented) is associated with the real scene outside the vehicle. In this way, the information relevant to the real scene outside the vehicle such as navigation and road signs can be presented in the corresponding positions in the real scene.

Preferably, the step of adjusting a direction of the reflected imaging beam includes adjusting the direction of the reflected imaging beam based on a running speed so that the depth of the image increases with the increase of the running speed.

The inventor has realized that if the running speed increases, the driver usually adjusts the line of sight to a higher position, so as to pay more attention to the road condition at distance, and vice versa. Therefore, by rotating the reflector unit based on the running speed, during normal driving, the driver can obtain information such as navigation, road signs, speed and oil gauge without adjusting the line of sight.

Fig. 3 is a structural schematic diagram of a vehicle-mounted display device according to an embodiment of the present invention. As shown in Fig. 3, an embodiment of the present invention further provides a vehicle-mounted display device 300. The vehicle-mounted display device 300 includes the above mentioned head-up display 100. The reflective surface is an inner surface 301 of a windshield for a vehicle.

Preferably, the reflective surface is an inner surface of a front windshield for a vehicle.

Preferably, the reflective surface is an inner surface of a rear windshield for a vehicle.

The reflective surface can be an inner surface of a rear windshield for a vehicle, the driver thus can directly rotate the head and adjust the line of sight to the rear windshield of the vehicle. Advantageously, the driver can also observe the rear windshield of the vehicle through the rearview mirror inside the vehicle, so as to obtain information. When the driver observes the rear windshield of the vehicle through the rearview mirror inside the vehicle, the information can be projected on the rear windshield of the vehicle in the form of a left-right mirror image, thereby providing the driver with correct information relevant to the outside of the vehicle.

By applying the adjusting unit, the image with the desired depth can be presented in the embodiment of the present invention, the displayed information can thus be fused together with the environment. In this way, information can be presented in the best mode, visual fatigue of the driver can also be effectively avoided, thereby avoiding danger.

Apparently, the person skilled in the art may make various alterations and variations to the invention without departing the spirit and scope of the invention. As such, provided that these modifications and variations of the invention pertain to the scope of the claims of the invention and their equivalents, the invention is intended to embrace these alterations and variations.

## Claims

1. A head-up display, **characterized in that** the head-up display comprises:
a digital light processing unit used for generating an imaging beam;
a reflector unit used for reflecting the imaging beam to a reflective surface cooperating with the head-up display to form an image; and
an adjusting unit used for adjusting a direction of the reflector unit, thereby providing a desired depth to the image.

2. The head-up display according to claim 1, **characterized in that** the digital light processing unit comprises a digital micromirror device; the digital micromirror device comprises a light source and a micromirror array.

3. The head-up display according to claim 2, **characterized in that** the digital micromirror device further comprises a color wheel for realizing color display.

4. The head-up display according to claim 1, **characterized in that** the adjusting unit comprises a first mechanical motor device for rotating the reflector unit around a horizontal axis.

5. The head-up display according to claim 1, **characterized in that** the adjusting unit comprises a second mechanical motor device for rotating the reflector unit around a vertical axis.

6. The head-up display according to claim 1, **characterized in that** the adjusting unit adjusts the direction of the reflector unit based on a content of the image.

7. The head-up display according to claim 1, **characterized in that** the adjusting unit adjusts the direction of the reflector unit based on a running speed so that the depth of the image increases with the increase of the running speed.

8. The head-up display according to claim 1, **characterized in that** the head-up display further comprises a housing unit; the housing unit accommodates the digital light processing unit, the reflector unit and the adjusting unit; and the housing unit comprises a transparent portion located between the reflector unit and the reflective surface.

9. A head-up display method, **characterized in that** the method comprises:
generating an imaging beam;
reflecting the imaging beam to a reflective surface to form an image; and
adjusting a direction of the reflected imaging beam, thereby providing a desired depth to the image.

10. The method according to claim 9, **characterized in that** the step of adjusting a direction of the reflected imaging beam comprises adjusting the direction of the reflected imaging beam around a horizontal axis.

11. The method according to claim 9, **characterized in that** the step of adjusting a direction of the reflected imaging beam comprises adjusting the direction of the reflected imaging beam around a vertical axis.

12. The method according to claim 9, **characterized in that** the step of adjusting a direction of the reflected imaging beam comprises adjusting the direction of the reflected imaging beam based on a content of the image.

13. The method according to claim 9, **characterized in that** the step of adjusting a direction of the reflected imaging beam comprises adjusting the direction of the reflected imaging beam based on a running speed so that the depth of the image increases with the increase of the running speed.

14. A vehicle-mounted display device, **characterized in that** the vehicle-mounted display device comprises the head-up display according to claims 1-8, the reflective surface is an inner surface of a windshield for a vehicle.

15. The vehicle-mounted display device according to claim 14, **characterized in that** the reflective surface is an inner surface of a front windshield for a vehicle.

16. The vehicle-mounted display device according to claim 14, **characterized in that** the reflective surface is an inner surface of a rear windshield for a vehicle.
